(19) Europäisches Patentamt
European Patent Office
Office européen des brevets

(11) Publication number: 0 501 380 A2

# (12) EUROPEAN PATENT APPLICATION

(21) Application number: **92103068.0**

(22) Date of filing: **24.02.92**

(51) Int. Cl.[5]: **C08L 83/04**, //(C08L83/04, 83:06)

(30) Priority: **25.02.91 JP 53416/91**

(43) Date of publication of application: **02.09.92 Bulletin 92/36**

(84) Designated Contracting States: **DE FR GB**

(71) Applicant: **Dow Corning Toray Silicone Company, Limited**
**Mitsui Bldg. No. 6, 2-3-16,**
**Nihonbashi-Muromachi, Chuo-Ku**
**Tokyo 103(JP)**

(72) Inventor: **Otomo, Takayoshi**
**6, 1-chome, Yushudai Nishi**
**Ichihara-shi, Chiba Prefecture(JP)**
Inventor: **Nakamura, Akito**
**6, 1-chome, Yushudai Nishi**
**Ichihara-shi, Chiba Prefecture(JP)**
Inventor: **Mikami, Ryuzo**
**6, 1-chome, Yushudai Nishi**
**Ichihara-shi, Chiba Prefecture(JP)**

(74) Representative: **Spott, Gottfried, Dr.**
**Spott Weinmiller & Partner**
**Sendlinger-Tor-Platz 11**
**W-8000 München 2(DE)**

## (54) Silicone rubber composition.

(57) A silicone rubber composition which contains an organopolysiloxane containing the carbinol group bonded to silicone across a divalent hydrocarbon group gives a silicone rubber, when cured, which has excellent resistance to repetitive deformation, such as bending and stretching.

EP 0 501 380 A2

The present invention relates to a silicone rubber composition which cures to give silicone rubber moldings which display an excellent resistance to repetitive deformation (e. g., bending, stretching, and such).

Silicone rubbers have an excellent heat resistance and cold resistance, and as a result are now used in various types of applications. However, because silicone rubbers have a poor resistance to repetitive deformation (e. g., bending, elongation), they are not entirely satisfactory for applications where resistance to repetitive deformation is crucial, for example, keyboards, automotive isokinetic joint boots, etc. Tactics which have already been undertaken in order to improve this resistance include reducing the quantity of filler in the silicone rubber composition in order to increase filler dispersion, and strengthening the filtration effort in order to achieve a maximum removal of foreign material. Nevertheless, these approaches still have not been able to give a silicone rubber composition with a completely satisfactory durability.

The present invention takes as its object a silicone rubber composition which cures to afford silicone rubber moldings which manifest an excellent resistance to repetitive deformation (e. g., bending, stretching, and such). The present inventors have discovered that the addition of a small quantity of carbinol-containing organopolysiloxane to a silicone rubber composition substantially improves the capacity of the cured silicone rubber molding to resist repetitive deformation.

This invention relates to silicone rubber composition consisting essentially of (A) 100 weight parts organopolysiloxane having the following general formula $R^1_aSiO_{(4-a)/2}$ wherein $R^1$ is a monovalent hydrocarbon group and a is a number with an average value of 1.90 to 2.05; (B) 5 to 100 weight parts reinforcing filler, (C) 0.1 to 20 weight parts organopolysiloxane containing the carbinol group bonded to silicon across a divalent hydrocarbon group, and (D) sufficient curing agent to cure the composition.

The organopolysiloxane comprising component (A) is the principal or base component of the composition according to the present invention. It is of the formula

$$R^1_aSiO_{(4-a)/2}$$

$R^1$ in the preceding formula encompasses substituted and unsubstituted monovalent hydrocarbon groups, and is exemplified by alkyl groups such as methyl, ethyl, propyl, and butyl; alkenyl groups such as vinyl and allyl; aryl groups such as phenyl and tolyl; cycloalkyl groups such as cyclohexyl; and groups obtained by replacing all or part of the hydrogen in the preceding groups with halogen or the cyano group, such as chloromethyl, trifluoropropyl, and cyanomethyl. The subscript a is to have a value of 1.90 to 2.05. This organopolysiloxane is exemplified as follows:
trimethylsiloxy-terminated methylvinylpolysiloxanes, trimethylsiloxy-terminated methylvinylsiloxane-dimethylsiloxane copolymers, dimethylvinylsiloxy-terminated dimethylsiloxane-methylphenylsiloxane copolymers, dimethylvinylsiloxy-terminated dimethylsiloxane-diphenylsiloxane copolymers, trimethylsiloxy-terminated dimethylsiloxane-methylphenylsiloxane-methylvinylsiloxane copolymers, dimethylvinylsiloxy-terminated methyl(3,3,3-trifluoropropyl)polysiloxanes, dimethylvinylsiloxy-terminated dimethylsiloxane-methyl(3,3,3-trifluoropropyl)siloxane copolymers, and organopolysiloxanes composed of $CH_2=CH(CH_3)_2SiO_{1/2}$ units, $(CH_3)_3SiO_{1/2}$ units, $(CH_3)_2SiO$ units, and $SiO_{4/2}$ units.

Component (A) should have a degree of polymerization in the range of 100 to 30,000 and preferably in the range of 1,000 to 20,000. Component (A) may be a liquid or gum at room temperature without restriction. The present invention may also employ combinations of the various organopolysiloxanes described above. Finally, when component (D) is the combination of platinum catalyst plus organohydrogenpolysiloxane, component (A) must then contain at least 2 alkenyl groups in each molecule.

The reinforcing filler comprising component (B) functions to improve the mechanical strength of the silicone rubber moldings obtained by curing the composition according to the present invention. This reinforcing filler is exemplified by precipitated silica, fumed silica, calcined silica, fumed titanium oxide, and the preceding fillers whose surface has been treated with an organosilicon compound such as hexamethyldisilazane, trimethylchlorosilane, or polymethylsiloxane. This component should be added at 5 to 100 weight parts per 100 weight parts component (A).

The carbinol-containing organopolysiloxane comprising component (C) is the essential component for imparting resistance to repetitive deformation (e. g., bending, stretching, etc.) to silicone rubber moldings obtained by curing the composition according to the present invention. This component (C) must contain the carbinol group bonded to silicon across a divalent hydrocarbon group. Its non-carbinol silicon-bonded organic groups are exemplified by the monovalent hydrocarbon groups listed above in the description of component (A). The molecular structure of this component (C) may be any of straight-chain, branched, or cyclic. Its degree of polymerization preferably falls within the range of 2 to 100 and more preferably within the range of 3 to 50. This carbinol-containing organopolysiloxane also functions as a plasticizer which

reduces the interaction between the polymer component and reinforcing filler in the uncured silicone rubber composition, and for this reason its carbinol content should be as high as possible. Component (C) should be added at 0.1 to 20 weight parts per 100 weight parts component (A). The component (C) under consideration can be synthesized by first running an addition reaction between SiH-containing organopolysiloxane and unsaturated alcohol whose hydroxyl group has been blocked by the triorganosilyl group, and by then subjecting the product therefrom to a desilylation reaction. The corresponding reaction equations are given below.

$$(CH_3)_3SiOCH_2CH{=}CH^2 \quad + \quad HSi{\equiv} \xrightarrow[\text{platinum catalyst}]{}$$

$$(CH_3)_3SiO(CH_2)_3Si{\equiv} \xrightarrow[\text{desilylation}]{}$$

$$HO(CH2)_3Si{\equiv}$$

Examples of component C include 3-hydroxypropyl-containing methylpolysiloxane and carbinol-modified organopolysiloxane.

Component (D) is a curing agent which functions to cure the composition according to the present invention. Included as curing agent are organoperoxides comprising component (D), exemplified by dicumyl peroxide, di-tert-butyl peroxide, tert-butyl cumyl peroxide, 2,5-dimethyl-2,5-di(tert-butylperoxy)hexane, 2,5-dimethyl-2,5-di(benzoylperoxy)hexane, 2,5-dimethyl-2,5-di(tert-butylperoxy)-3,3,5-trimethylcyclohexane, benzoyl peroxide, 2,4-dichlorobenzoyl peroxide, and p-chlorobenzoyl peroxide. The organoperoxide should be added in a quantity which will lead to a thorough cure of the composition of the present invention, but the general preferred range is 0.1 to 15 weight parts per 100 weight parts component (A).

Component (D) also encompasses another type of curing agent: the combination of platinum catalyst plus organohydrogenpolysiloxane having at least 3 silicon-bonded hydrogen atoms in each molecule. This organohydrogenpolysiloxane having at least 3 silicon-bonded hydrogen atoms is exemplified by trimethylsiloxy-terminated methylhydrogenpolysiloxanes, trimethylsiloxy-terminated dimethylsiloxane-methylhydrogensiloxane copolymers, dimethylsiloxy-terminated methylhydrogenpolysiloxanes, and cyclic methylhydrogensiloxanes. It should have a degree of polymerization of 3 to 700, and it should be added in a quantity which affords values of (0.5:1) to (20:1) for the ratio between the total number of moles of silicon-bonded hydrogen atoms in component (D) and the total number of moles of alkenyl groups in component (A). This type of curing agent includes the co-use of a platinum catalyst as an addition reaction-accelerating catalyst. Said platinum catalyst is exemplified by chloroplatinic acid and its solutions in alcohol, ketone, or ether; chloroplatinic acid-olefin complexes; chloroplatinic acid-alkenylsiloxane complexes; platinum black; and platinum supported on a carrier. The platinum catalyst should be added at 0.1 to 500 weight parts of platinum metal for each 1,000,000 weight parts of the total weight of the composition according to the present invention. In order to secure a suitable working time, a known curing retarder may be added along with this curing agent under consideration, and examples in this regard are acetylenic compounds, hydrazine compounds, triazole compounds, phosphine compounds, and mercaptan compounds.

The silicone rubber composition according to the present invention is produced simply by mixing the aforementioned components (A) through (D) to homogeneity. Moreover, those additives known for use with silicone rubbers may be added on an optional basis, and examples here are extender fillers such as powdered quartz, diatomaceous earth, asbestos, calcium carbonate, and aluminosilicic acid; as well as heat stabilizers and flame retardants such as iron oxide, cerium oxide, aluminum oxide, zinc oxide, and manganese carbonate. The silicone rubber composition according to the present invention may be cured to give the corresponding silicone rubber molding by heating when component (D) is an organoperoxide or by heating or standing at room temperature when component (D) is the combination of platinum catalyst and organohydrogenpolysiloxane.

The following examples are included for illustrative purposes only and should not be construed as limiting the invention which is properly set forth in the appended claims. All parts are parts by weight. The constant elongation fatigue resistance referenced in the examples was measured as follows. To obtain the test specimen from the silicone rubber sheet, a number 3 dumbbell as stipulated in JIS K 6301 was punched from the 2 mm-thick silicone rubber sheet. This test specimen was installed in a De Mattia tester as specified in Section 15 of JIS K 6301 and was stretched and relaxed at 300 plus or minus 10

cycles/minute wherein the maximum distance between the indicator lines was 40 mm and the minimum distance between the indicator lines was 20 mm. The numerical value reported for the constant elongation fatigue resistance is the number of cycles (1 cycle = 1 back-and-forth motion) to failure of the test specimen. In this measurement configuration, the test specimen held between the clamps was repetitively elongated over a draw ratio of 0 to 100%.

Reference Example 1

First 100 weight parts methylhydrogenpolysiloxane (SiH content of 0.77 weight percent, average degree of polymerization of 10) with the following formula (in which Me is methyl) was weighed into an addition funnel.

$Me_3SiO(SiMe_2O)_x(SiHMeO)_ySiMe_3$

Next, 125 weight parts silylated allyl alcohol with the following formula was charged to a 1-liter four-neck flask equipped with addition funnel, reflux condenser, stirrer, and thermometer.

$CH_2=CHCH_2OSi(CH_3)_3$

The temperature in the flask was raised to 80 °C, and sufficient 1 % chloroplatinic acid solution was added to give a platinum concentration of 20 ppm based on the total weight of the polysiloxane and silylated allyl alcohol. The polysiloxane was then gradually dripped in from the addition funnel over a period of approximately 1 hour. The reaction was continued for an additional 1 hour after the completion of addition while maintaining the reaction temperature at 110 to 130 °C. Upon confirming that no SiH was present in a sample of the reaction mixture, unreacted material and low boilers were removed by distillation in vacuo. After then cooling to room temperature, 350 weight parts methanol and 1.6 parts acetic acid were introduced into the same flask. The temperature was gradually raised, and a desilylation reaction was conducted over approximately 1 hour while distilling out the low-boiling components. After desilylation, the low-boiling components (e. g., excess methanol, etc.) were distilled out in vacuo in order to recover 101 weight parts of the target 3-hydroxypropyl-containing methylpolysiloxane (polysiloxane I). This polysiloxane contained 9.00 weight % 3-hydroxypropyl groups, which was in good agreement with the theoretical value of 9.05 weight %.

Reference Example 2

First, 30 weight parts methylhydrogenpolysiloxane with the following formula was weighed into an addition funnel.

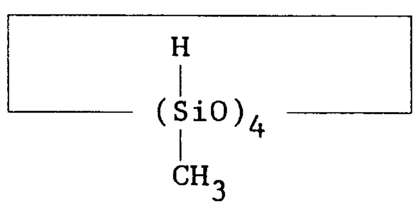

Next, 150 weight parts disilylated glycerol monoallyl ether with the following formula

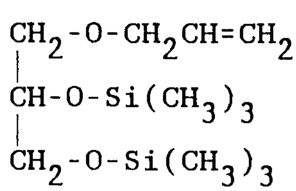

was charged to a 1-liter four-neck flask equipped with addition funnel, reflux condenser, stirrer, and thermometer. The temperature in the flask was raised to 80 °C, and sufficient 1 % chloroplatinic acid solution was added to give a platinum concentration of 20 ppm based on the total weight of the

polysiloxane and disilylated glycerol monoallyl ether. The methylhydrogenpolysiloxane was then gradually dripped in from the addition funnel over a period of approximately 1 hour. The reaction was continued for an additional 1 hour after the completion of addition while maintaining the reaction temperature at 110 to 130 °C. Upon confirming that no SiH was present in a sample of the reaction mixture, unreacted material and low boilers were removed by distillation in vacuo. After then cooling to room temperature, 350 weight parts methanol and 1.6 parts acetic acid were introduced into the same flask. The temperature was gradually raised, and a desilylation reaction was conducted over approximately 1 hour while distilling out the low-boiling components. After desilylation, the low-boiling components (e. g., excess methanol, etc.) were distilled out in vacuo in order to recover 95 weight parts of the target carbinol-modified organopolysiloxane (polysiloxane II). This polysiloxane contained 17.2 weight % carbinol groups, which was in good agreement with the theoretical value of 17.7 weight %.

Example 1

First 100 parts diorganopolysiloxane gum with average degree of polymerization of 7,000 (99.82 mole % dimethylsiloxy units and 0.18 mole % methylvinylsiloxy units), 25 parts dry-method silica with specific surface area of 300 $m^2/g$, and polysiloxane I from Reference Example 1 (quantity reported in Table 1) were mixed and kneaded in a kneader mixer. Subsequent heat treatment at 170 °C for 1 hour gave the particular silicone rubber base. Then 0.6 parts 2,5-dimethyl-2,5-di(tert-butylperoxy)hexane was mixed to homogeneity into 100 parts of the particular silicone rubber base to give silicone rubber compositions A and B, respectively.

Silicone rubber compositions A and B were each press-molded for 10 minutes at 170 °C/20 $kg/cm^2$ to give 2 mm-thick silicone rubber sheets. These sheets were then held for 4 hours in a forced convection oven at 200 °C. Dumbbells for evaluation testing were made from the resulting sheets, and the constant elongation fatigue resistance and physical properties were measured. These results are reported in Table 1.

For comparison, a silicone rubber composition C was prepared as for silicone rubber composition B, but in the present case using silanol-terminated dimethylpolysiloxane with viscosity at 25 °C of 40 centistokes (polysiloxane III) in place of polysiloxane I. In addition, a silicone rubber composition D was prepared as for silicone rubber composition C, but in this case omitting polysiloxane III. Silicone rubber sheets were obtained from these silicone rubber compositions C and D by the same method as above, and these sheets were subjected to measurement of their physical properties and constant elongation fatigue resistance as above. These measurement results are also reported in Table 1 as Comparison Example 1. The obtained results show that the silicone rubber compositions according to the present invention cured to give silicone rubber sheets that could withstand over 3,000,000 elongations, and had a better constant elongation fatigue resistance than the silicone rubber compositions according to Comparison Example 1.

Table 1

| | Example 1 | | Comparison Example 1 | |
|---|---|---|---|---|
| | A | B | C | D |
| polysiloxane addition (see note 1) | | | | |
| polysiloxane I | 2.0 | 3.2 | 0.0 | 0.0 |
| polysiloxane III | 0.0 | 0.0 | 3.2 | 0.0 |
| physical properties | | | | |
| hardness (JIS A) | 45 | 45 | 45 | 51 |
| tensile strength (kgf/cm2) | 81 | 85 | 81 | 63 |
| tear strength (kgf/cm) | 13.1 | 14.5 | 13.3 | 9.6 |
| elongation (%) | 343 | 392 | 390 | 255 |
| constant elongation fatigue resistance | | | | |
| cycles to failure (x $10^4$) | 354 | 315 | 97 | 80 |

Note 1. Given in weight parts per 100 parts of the diorganopolysiloxane gum with average degree of polymerization of 7,000

Example 2

First 100 parts diorganopolysiloxane gum of example 1, 40 parts wet-method silica with specific surface area of 200 m2/g, and polysiloxane II from Reference Example 2 (quantity reported in Table 2) were blended and then mixed and kneaded in a kneader mixer. Subsequent heat treatment at 170 °C for 1.5 hours gave the particular silicone rubber base. Then 0.6 parts 2,5-dimethyl-2,5-di(tert-butylperoxy)hexane was mixed to homogeneity into 100 parts of the particular silicone rubber base to give silicone rubber compositions E and F, respectively. Silicone rubber compositions E and F were each molded, cured, and tested as in Example 1. These results are reported in Table 2.

For comparison, a silicone rubber composition G was prepared as for silicone rubber composition E, but in this case adding 2.0 parts of the polysiloxane III used for silicone rubber composition C in Comparison Example 1 in place of polysiloxane II. In addition, a silicone rubber composition H was prepared as for the preceding silicone rubber compositions, but in this case adding neither polysiloxane II nor polysiloxane III. These silicone rubber compositions were evaluated as above, and these results are also reported in Table 2. These results demonstrate that the silicone rubber compositions according to the present invention cured to give silicone rubber sheets which could withstand over 1,500,000 elongations, and had a better constant elongation fatigue resistance than the silicone rubber compositions according to Comparison Example 2.

Table 2

| | Example 2 | | Comparison Example 2 | |
|---|---|---|---|---|
| | E | F | G | H |
| polysiloxane addition (see note 1) | | | | |
| polysiloxane II | 1.0 | 1.5 | 0.0 | 0.0 |
| polysiloxane III | 0.0 | 0.0 | 2.0 | 0.0 |
| physical properties | | | | |
| hardness (JIS A) | 47 | 46 | 47 | 53 |
| tensile strength ($kgf/cm^2$) | 81 | 77 | 79 | 66 |
| tear strength (kgf/cm) | 9.2 | 8.5 | 8.0 | 6.1 |
| elongation (%) | 355 | 376 | 348 | 260 |
| constant elongation fatigue resistance | | | | |
| cycles to failure (x $10^4$) | 180 | 160 | 54 | 32 |

Note 1. Given in weight parts per 100 parts of the diorganopolysiloxane gum with average degree of polymerization of 7,000

Example 3

First 100 parts dimethylvinylsiloxy-terminated diorganopolysiloxane gum of example 1, 25 parts dry-method silica with specific surface area of 300 m2/g, and polysiloxane I from Reference Example 1 (quantity reported in Table 3) were blended and then mixed and kneaded in a kneader mixer. Subsequent heat treatment at 170 °C for 1 hour gave the particular silicone rubber base. The following were mixed to homogeneity on a two-roll mill into 100 parts of the particular silicone rubber base to give silicone rubber compositions I and J: 0.5 parts dimethylsiloxane-methylhydrogensiloxane copolymer (viscosity of 5 centistokes at 25 °C, Si-bonded hydrogen content of 0.8 weight %) with the following formula (Me = methyl)

$Me_3SiO(SiMe_2O)_x(SiHMeO)_ySiMe_3$,

0.06 parts monomethyltris(monomethylbutynoxy)silane, and chloroplatinic acid/tetramethylvinyldisiloxane complex in a quantity sufficient to give 15 ppm platinum based on the overall weight. Each silicone rubber composition I and J was press-molded for 5 minutes at 150 °C/20 kg/cm2 to give the 2 mm-thick silicone rubber sheet. Dumbbells for evaluation testing were made from the resulting silicone rubber sheets, and the constant elongation fatigue resistance and physical properties were measured as in Example 1. These measurement results are reported in Table 3. For comparison, a silicone rubber composition K was prepared as above for silicone rubber composition J, but in this case adding 2.5 parts polysiloxane III as used for silicone rubber composition C in Comparison Example 1 in place of polysiloxane I. In addition, a silicone rubber composition L was prepared as for silicone rubber composition K above, but in this case omitting polysiloxane III. The properties of these silicone rubber compositions K and L were measured as above, and these measurement results are also reported in Table 3. These results demonstrate that the silicone rubber compositions according to the present invention cured to give silicone rubber sheets which could withstand over 2,500,000 elongations, and had a better constant elongation fatigue resistance than the silicone rubber compositions according to Comparison Example 3.

Table 3

| | Example 3 | | Comparison Example 3 | |
|---|---|---|---|---|
| | I | J | K | L |
| polysiloxane addition (see note 1) | | | | |
| polysiloxane I | 2.0 | 2.5 | 0.0 | 0.0 |
| polysiloxane III | 0.0 | 0.0 | 2.5 | 0.0 |
| physical properties | | | | |
| hardness (JIS A) | 43 | 42 | 43 | 49 |
| tensile strength ($kgf/cm^2$) | 85 | 88 | 79 | 63 |
| tear strength (kgf/cm) | 15.0 | 13.2 | 13.6 | 9.1 |
| elongation (%) | 396 | 425 | 440 | 291 |
| constant elongation fatigue resistance | | | | |
| cycles to failure (x $10^4$) | 303 | 279 | 120 | 70 |

Note 1. Given in weight parts per 100 parts of the diorganopolysiloxane gum with average degree of polymerization of 7,000

## Claims

**1.** Silicone rubber composition consisting essentially of

(A) 100 weight parts organopolysiloxane having the following general formula

$R^1_aSiO_{(4-a)/2}$

wherein $R^1$ is a monovalent hydrocarbon group and a is a number with an average value of 1.90 to 2.05,

(B) 5 to 100 weight parts reinforcing filler,

(C) 0.1 to 20 weight parts organopolysiloxane containing the carbinol group bonded to silicon across a divalent hydrocarbon group, and

(D) sufficient curing agent to cure the composition.